# EUROPÄISCHE PATENTSCHRIFT

(11) **EP 3 044 844 B1**
(45) Veröffentlichungstag und Bekanntmachung des Hinweises auf die Patenterteilung: **05.08.2020**
(21) Anmeldenummer: 14792730.5
(22) Anmeldetag: 11.09.2014
(51) Int. Cl.: H01M 2/10, H01G 4/008, H01G 4/224, H01G 4/258

(54) **BEHÄLTER FÜR EINE PER HAND TRAGBARE, WIEDER AUFLADBARE GLEICHSTROM-ENERGIE-SPEICHERVORRICHTUNG**
CONTAINER FOR A PORTABLE, RECHARGEABLE DIRECT CURRENT STORAGE DEVICE
CONTENANT POUR DISPOSITIF ACCUMULATEUR D'ÉNERGIE À COURANT CONTINU RECHARGEABLE PORTATIF

(30) Priorität: 11.09.2013 DE 102013110002
(43) Veröffentlichungstag der Anmeldung: 20.07.2016
(73) Patentinhaber: GreenPack Mobile Energy Solutions GmbH, 12489 Berlin (DE)
(72) Erfinder: CONSTIEN, Hans-Peter, 12159 Berlin (DE)
(74) Vertreter: Bakhtyari, Arash
(86) Internationale Anmeldenummer: PCT/DE2014/100333
(87) Internationale Veröffentlichungsnummer: WO 2015/035984

(56) Entgegenhaltungen:
- DE-A1-102010 048 756
- DE-U1- 29 515 922
- US-A- 3 665 285
- US-A- 4 588 938
- US-A- 5 378 556

## Beschreibung

Die Erfindung betrifft einen Behälter für eine per Hand tragbare, wieder aufladbare Gleichstrom-Energie-Speichervorrichtung. Ferner betrifft die Erfindung einen solchen Behälter zusammen mit einer Steckereinrichtung zum Aufsetzen des Behälters auf die Steckereinrichtung.

Ein derartiger Behälter ist mit folgenden Merkmalen beispielsweise aus der US 2008/0053716 A1 bekannt. Ein Gehäuse aufweisend eine Gehäuseunterseite mit einer Gehäusestellfläche, eine Gehäuseoberseite, Gehäuseseitenwände und einen Gehäuseinnenraum, ein elektrischer Anodenkontakt und ein elektrischer Kathodenkontakt, wobei in der Gehäuseunterseite an einander gegenüberliegenden Kanten der Gehäuseunterseite Führungsrücksprünge ausgebildet sind, die sich von einer durch die Gehäusestellfläche definierten Abstellebene in Richtung Gehäuseoberseite erstrecken. Einige Millimeter innerhalb der Führungsrücksprünge sind der Anodenkontakt und der Kathodenkontakt des Behälters angeordnet.

Die Gehäusestellfläche ist dabei durch die Bereiche der Gehäuseunterseite definiert, die beim Abstellen des Behälters auf einer ebenen Fläche mit der ebenen Fläche in mechanischen Kontakt treten. Im einfachsten vollkommen plan ausgebildeten Fall bildet die gesamte Gehäuseunterseite die Gehäusestellfläche .

Beim Abstellen dieses Behälters beispielsweise auf verschmutztem, sandigem oder feuchtem Untergrund besteht die Gefahr der Beschädigung und/oder Verschmutzung der Elektroden-Kontakte bis hin zur Möglichkeit des Herbeiführens eines Kurzschlusses der im Behälter befindlichen Gleichstrom-Energiespeicher-Vorrichtung.

Aus der DE102010048756A1, der US4588938A und der US3665285A sind ebenfalls Behälter für eine per Hand tragbare, wieder aufladbare Gleichstrom-Speichervorrichtung bekannt. Diese Behälter zeigen eine Gehäusestellfläche, die eine Abstellebene definiert. Jeder Behälter weist einen elektrischen Anodenkontakt und einen elektrischen Kathodenkontakt auf. Diese Kontakte sind in Rücksprüngen angeordnet, die im Wesentlichen mittig in den Gehäusestellflächen positioniert sind.

Der vorliegenden Erfindung liegt die Aufgabe zu Grunde einen verbesserten Behälter zu schaffen, dessen Elektroden-Kontakte auch unter ungünstigen Umgebungsbedingungen besser geschützt sind.

Diese Aufgabe wird durch einen Behälter mit den Merkmalen des Anspruchs 1 gelöst.

Erfindungsgemäß ist vorgesehen, dass der Anodenkontakt und der Kathodenkontakt in einem oder in mehreren der Führungsrücksprünge mindestens fünf Millimeter beabstandet von der Abstellebene am Gehäuse angeordnet sind, wobei der zum Anodenkontakt und zum Kathodenkontakt benachbarte Bereich der jeweiligen Gehäuseseitenwand mindestens fünf Millimeter von der Abstellebene beabstandet endet. Bevorzugt beträgt der Abstand mehr als 8 Millimeter, besonders bevorzugt mehr als 10 Millimeter. Der Anodenkontakt und der Kathodenkontakt können dabei entweder in Richtung der Gehäuseunterseite oder in Richtung der Gehäuseseitenwände hin orientiert sein.

Durch diese Struktur der Führungsrücksprünge sind die Elektroden-Kontakte nicht nur von der regelmäßig schmutz- und/oder feuchtigkeitsbehafteten Stellebene entfernt sondern es wird auch verhindert, dass sich Staub, Matsch oder Schnee in Öffnungen auf der Gehäuseunterseite einpressen kann, die von der Stellebene aus den Zugang zu den Elektroden-Kontakten gewährleisten. An Stelle von Öffnungen, die sich leicht ganz oder teilweise zusetzen, weist die Gehäuseunterseite von der Gehäusestellfläche aus betrachtet zumindest im Randbereich des Gehäuses ein abgestuftes Oberflächenprofil auf. Dieses abgestufte und damit von der Abstellebene beabstandete Oberflächenprofil ist lateral nicht durch Abschnitte der Gehäuseseitenwände begrenzt. Dadurch hat auch bei einem Abstellen des Behälters im Matsch eventuell bis zu den abgestuft beabstandeten Bereichen der Gehäuseunterseite herauf dringender Schmutz keinen lateralen Halt. Ein Anhaften des Schmutzes wird auf diese Weise erschwert oder gar verhindert. Selbst wenn es zu einem Anhaften des Schmutzes an den abgestuft beabstandeten Bereichen der Gehäuseunterseite kommen sollte, so lässt sich dieser Schmutz einfach entfernen, weil die seitliche Zugänglichkeit durch die ebenfalls nach oben hin beabstandeten Gehäuseseitenwände gewährleistet ist.

Das Gehäuse weist bevorzugt eine quaderförmige Außenkontur auf. Diese Geometrie wird zumindest von der Gehäuseunterseite zusammen mit vier Gehäuseseitenwänden gebildet. Die Gehäuseoberseite kann auch, abweichend von der Quaderform nach außen hin gewölbt oder geknickt ausgebildet sein.

Aus den vorangehend genannten Gründen ist es besonders vorteilhaft, wenn die Gehäuseunterseite im Bereich zwischen den an den gegenüberliegenden Kanten des Gehäuses ausgebildeten Führungsrücksprüngen mehr als fünf Millimeter von der Abstellebene beabstandet ist. Besonders bevorzugt beträgt dieser Abstand mehr als 8 Millimeter, noch bevorzugter mehr als 10 Millimeter. Der beabstandet abgestufte Bereich erstreckt sich dabei über die gesamte Breite der Gehäuseunterseite.

Bevorzugt weisen die Führungsrücksprünge Zentrierabschnitte auf, die benachbart zu dem Anodenkontakt und/oder dem Kathodenkontakt angeordnet sind. Diese Zentrierabschnitte erlauben den Eingriff entsprechend invers geformter Zentriervorsprünge einer Steckereinrichtung. Dadurch kommt es zu einer definierten Positionierung zwischen Steckereinrichtung und Behälter, so dass die Elektroden-Kontakte des Behälters auch mit vergleichsweise filigran und schlank ausgestalteten Elektroden-Kontakteinrichtungen der Steckereinrichtung sicher und definiert elektrisch kontaktiert werden können. Bevorzugt sind sowohl der Anodenkontakt als auch der Kathodenkontakt auf zwei Seiten von Zentriervorsprüngen umgeben. Auf diese Weise lässt sich ein Verkanten zwischen Behälter und zugehöriger Steckereinrichtung sicher vermeiden. Für die besonders einfache Handhabbarkeit ist es von Vorteil, die Führungsrücksprünge unterhalb des Schwerpunktes des mit Gleichstrom-Energie-Speichereinrichtungen bestückten Behälters anzuordnen.

Weiterhin sind die Zentrierabschnitte des Behälters bevorzugt derart ausgebildet, dass in der Aufsicht auf die Gehäuseunterseite die Zentrierabschnitte benachbart zum Anodenkontakt eine andere Querschnittskontur aufweisen als die Zentrierabschnitte benachbart zum Kathodenkontakt. Auf diese Weise lässt sich eine gegenpolige Kontaktierung von Anodenkontakt und Kathodenkontakt mit der zugehörigen Steckereinrichtung einfach und sicher vermeiden.

Im Hinblick auf eine besonders einfache und sichere Kontaktierung von Behälter und Steckereinrichtung ist mit Vorteil vorgesehen, dass sich die Zentrierabschnitte zumindest abschnittsweise über den Anodenkontakt und/oder über den Kathodenkontakt hinaus in Richtung Gehäuseoberseite erstrecken. Die Zentrierabschnitte greifen somit tiefer in Richtung Gehäuseoberseite als die abgestuft beabstandeten Bereiche der Gehäuseunterseite. Entsprechend invers zu den Zentrierabschnitten ausgebildete Führungszapfen greifen beim Aufsetzen des Gehäuses auf eine zugehörige Steckereinrichtung im Bereich der gegenüber liegenden Kanten des Gehäuses in die Zentrierabschnitte ein. Entlang ihrer Erstreckungsrichtung üben die Führungszapfen im Zusammenspiel mit den Zentrierabschnitten beim Kontaktiervorgang von Gehäuse und Steckereinrichtung eine Zwangsführung aus.

Für alle vorangehend beschriebenen Varianten des Behälters ist es von Vorteil, dass die Führungsrücksprünge zumindest abschnittsweise als Vertiefungen der Gehäuseseitenwände ausgebildet sind. Dadurch kann die zugehörige Steckereinrichtung derart ausgebildet werden, dass diese im zusammengesteckten Zustand von Gehäuse und Steckereinrichtung die Vertiefungen der Gehäuseseitenwände in der Ebene der Gehäuseseitenwände ausfüllt. Auf diese Weise ist es möglich, eine Mehrzahl derartiger Gehäuse und zugehöriger Steckereinrichtungen mit den Gehäuseseitenwänden der Gehäuse bündig nebeneinander und somit sehr Platz sparend zu positionieren.

Es ist bei allen vorangehend beschriebenen Ausführungsformen von Vorteil, dass der Anodenkontakt und der Kathodenkontakt in einander gegenüber liegenden Führungsrücksprüngen angeordnet sind. Auf diese Weise wird die Wegstrecke für eventuell auftretende Kriechströme über die Oberflächenkontur der Gehäuseunterseite maximiert.

Eine bevorzugte Variante des Behälters ist dadurch gekennzeichnet, dass die Gehäuseunterseite eine Anodenöffnung und eine Kathodenöffnung aufweist, wobei von der Anodenöffnung bis zum Anodenkontakt als Abschnitt eines der Führungsrücksprünge ein Anodenführungskanal mit einer Anodenführungskanaltiefe ausgebildet ist und von der Kathodenöffnung bis zum Kathodenkontakt als Abschnitt eines der Führungsrücksprünge ein Kathodenführungskanal mit einer Kathodenführungskanaltiefe ausgebildet ist.

Zusätzlich zu den abgestuft beabstandeten Bereichen sind in diesen Bereichen der Gehäuseunterseite noch Öffnungen vorgesehen, durch die hindurch die Elektroden-Kontakte über Führungskanäle von den Öffnungen weiter beabstandet zugänglich sind. Diese Struktur bietet eine weitere Verbesserung der Sicherheit gegenüber dem ungewollten Verschmutzen oder Kurzschließen von Anodenkontakt und Kathodenkontakt.

Besonders bevorzugt sind derartige Führungskanäle so ausgebildet, dass sich der Anodenführungskanal und/oder der Kathodenführungskanal angrenzend an eine der vier Gehäuseseitenwände und entlang der Gehäuseseitenwände erstrecken. Bei dieser Ausführungsform schützen die Gehäuseseitenwände die Elektrodenkontakte von der Seite her.

Auch für die Ausführungsform mit Führungskanälen ist es von Vorteil, dass der Anodenkontakt und der Kathodenkontakt innerhalb des jeweiligen Führungskanals und/oder an den Gehäuseseitenwänden derart angeordnet sind, dass der Abstand zwischen Anodenkontakt und Kathodenkontakt maximal ist. Auf diese Weise wird der unerwünschte Einfluss von Kriechströmen zwischen den Elektroden minimiert.

Weiterhin ist es von Vorteil, wenn die Anodenöffnung und die Kathodenöffnung der jeweiligen Führungskanäle unterschiedliche Öffnungskonturen aufweisen. Die Führungskanäle übernehmen dann die vorangehend beschriebene Funktion der Zentrierabschnitte.

Weiterhin ist es von Vorteil, wenn der Anodenführungskanal und/oder der Kathodenführungskanal gegenüber dem Gehäuseinnenraum hermetisch versiegelt sind. Dadurch kann auch bei einem Abstellen des Gehäuses in Wasser verhindert werden, dass das Wasser in den Führungskanälen bis zu den Elektroden-Kontakten aufsteigt und diese damit kurz schließt.

Für alle der vorangehend beschriebenen Ausführungsformen des Behälters ist es vorteilhaft, dass der Anodenkontakt und/oder der Kathodenkontakt durch mechanisch verschwenkbare Abdeckeinrichtungen verdeckt sind. Diese Abdeckeinrichtungen werden beim Aufsetzen des Gehäuses auf die Steckereinrichtung beispielsweise durch die Eigengewichtskraft des Gehäuses beiseite bewegt. Bei komprimierbaren Medien wie Matsch oder Schnee reicht die beim Aufstellen des Gehäuses durch den Matsch oder Schnee ausgeübte Kraft nicht aus, die Abdeckeinrichtungen zu bewegen. Alternativ kann auch ein Mechanismus vorgesehen sein, bei dem beispielsweise eine speziell ausgebildete Struktur, die an der Steckereinrichtung vorgesehen ist, beim Aufsetzen des Gehäuses auf die Steckereinrichtung die Abdeckeinrichtung entriegelt und öffnet. Auf diese Weise ist ein zusätzlicher Schutz der Elektroden-Kontakte gewährleistet.

Weiterhin ist es für alle vorangehend beschriebenen Ausführungsformen von Vorteil, dass benachbart zu den Führungsrücksprüngen und/oder innerhalb der Führungsrücksprünge Klimatisierungsschnittstellen für die Klimatisierung des Gehäuseinnenraums ausgebildet sind. Beim Aufsetzen des Gehäuses auf die Steckereinrichtung erfolgt in einem Kopplungs-Ablauf eine elektrische Kontaktierung und ein Anschluss des Gehäuses an eine zugehörige Klimatisierungseinrichtung.

Für alle vorangehend beschriebenen Varianten des Gehäuses mit den Führungsrücksprüngen ist als System eine passend ausgebildete Steckereinrichtung zum elektrischen Kontaktieren des Anodenkontaktes und des Kathodenkontaktes des Behälters durch das Aufsetzen des Behälters auf die Steckereinrichtung vorgesehen.

Nachfolgend werden rein beispielhaft verschiedene Ausführungsformen des Gehäuses und passender Steckereinrichtungen anhand der Figuren beschrieben.

Es zeigt:
- Figur 1: eine schematische Perspektivansicht einer ersten Ausführungsform eines Gehäuses 1 mit einer zugehörigen Steckereinrichtung 4;
- Figur 2: eine seitliche Aufsicht auf das Gehäuse 1 aus der Figur 1;
- Figur 3: eine Aufsicht auf die Gehäuseunterseite 10 des Gehäuses 1 aus der Figur 1;
- Figur 4: einen vergrößerten Teilausschnitt der Aufsicht auf die Gehäuseunterseite 10 aus Figur 3;
- Figur 5: eine Schnittdarstellung entlang der Linie V-V aus Figur 2, wobei Teile einer Steckereinrichtung 4 zusätzlich dargestellt sind;
- Figur 6: eine seitliche Aufsicht auf eine zweite Ausführungsform des Gehäuses 1 mit Schnittstellen für eine Klimatisierung des Gehäuseinnenraums;
- Figur 7: einen vergrößerten Teilausschnitt aus der Figur 6;
- Figur 8: eine Aufsicht auf die Seite einer dritten Ausführungsform eines Gehäuses 1 ohne zugehörige Steckereinrichtung;
- Figur 9: die Ansicht des Gehäuses 1 aus Figur 8 aufgesetzt auf eine passende Steckereinrichtung 4;
- Figur 10: eine Aufsicht auf die Gehäuseunterseite 10 des Gehäuses 1 aus Figur 9;
- Figur 11: eine seitliche Aufsicht auf das Gehäuse 1 aus Figur 8;
- Figur 12: eine perspektivische Ansicht auf das Gehäuse 1 aus Figur 8;
- Figur 13: eine perspektivische Ansicht auf das Gehäuse 1 aus Figur 9;
- Figur 14: eine perspektivische Ansicht auf die Steckereinrichtung 4 zur dritten Ausführungsform des Gehäuses 1;
- Figur 15: eine Aufsicht auf die Frontseite der Steckereinrichtung 4 aus Figur 14;
- Figur 16: eine Aufsicht auf die Oberseite der Steckereinrichtung 4 aus Figur 14;
- Figur 17: eine Schnittdarstellung entlang der Linie XVII-XVII aus Figur 9;
- Figur 18: eine Schnittdarstellung entlang der Linie XVIII-XVIII aus Figur 8 und
- Figur 19: eine perspektivische Ansicht einer vergrößerten Teilansicht des Gehäuses 1 mit Steckereinrichtung 4 aus der Figur 13 ohne Gehäuseseitenwand 10.

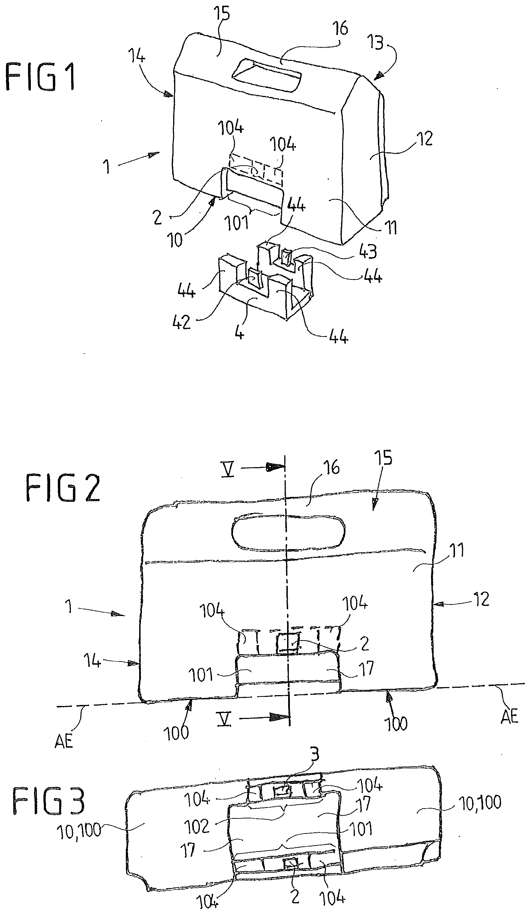

Figur 1 zeigt eine schematische Perspektivansicht einer ersten Ausführungsform eines Gehäuses 1 für eine per Hand tragbare, wieder aufladbare Gleichstrom-Energie-Speichervorrichtung mit einer zugehörigen Steckereinrichtung 4. Das Gehäuse 1 weist eine im Wesentlichen quaderförmige Außenform mit einer Gehäuseoberseite 15, vier Gehäuseseitenwänden 11,12,13,14 und einer Gehäuseunterseite 10 auf. Die Gehäuseoberseite 15 ist abweichend von der reinen Quaderform etwas nach oben gewölbt ausgebildet und weist einen mittig angeordneten Handgriff 16 auf. Unterhalb des Handgriffs 16 im Bereich der Gehäuseunterseite 10 ist der vordere Führungsrücksprung 101 zu erkennen. Dieser ist insbesondere als Vertiefung in der vorderen Gehäuseseitenwand 11 ausgebildet. Das heißt die Gehäuseseitenwand 11 läuft im Bereich des Führungsrücksprungs 101 nicht so tief nach unten hin aus wie in den benachbarten Bereichen. Auf der zum Führungsrücksprung 101 gegenüberliegenden hinteren Kante der Gehäuseunterseite 10 ist ein hier nicht gezeigter, ähnlich geformter weiterer Führungsrücksprung 102 ausgebildet. Im Bereich des vorderen Führungsrücksprungs 101 ist hinter der Gehäuseseitenwand 11 ein Anodenkontakt 2 angeordnet. Der Anodenkontakt 2 ist beidseitig durch Zentrierabschnitte 104 umgeben. Diese sind ebenfalls durch die Gehäuseseitenwand 11 verdeckt und lateral geschützt. Sowohl der Anodenkontakt 2 als auch die beidseitig angeordneten Zentrierabschnitte 104 sind nur von unten her durch den Führungsrücksprung 101 zugänglich. Durch den in diese Darstellung nicht gezeigten weiteren Führungsrücksprung 102 ist von unten her ein Kathodenkontakt 3 zugänglich, der ebenfalls beidseitig von Zentrierabschnitten 104 umgeben ist.

Eine Steckereinrichtung 4 ist unterhalb des Gehäuses 1 gezeigt. Die Steckereinrichtung 4 weist einen Anodenkontaktstecker 42 auf, der beidseitig von zwei Führungszapfen 44 umgeben ist. Die Führungszapfen 44 des Anodenkontaktsteckers 42 sind dabei derart beabstandet, dass diese beim Aufsetzen des Gehäuses 1 auf die Steckereinrichtung 4 in die beiden Zentrierabschnitte 104 des Anodenkontakts 2 eingreifen. Entsprechend zum Abstand zwischen Anodenkontakt 2 und dem hier nicht dargestellten Kathodenkontakt 3 im Gehäuse 1 ist zum Anodenkontaktstecker 42 ein Kathodenkontaktstecker 43 an der Steckereinrichtung 4 vorgesehen. Auch der Kathodenkontaktstecker 43 ist beidseitig von zwei Führungszapfen 44 umgeben. Alle vier Führungszapfen 44 greifen beim Aufsetzen des Gehäuses 1 auf die Steckereinrichtung 4 in korrespondierende Zentrierabschnitte 104 des Gehäuses ein. Dadurch wird eine sichere und definiert herbeigeführte elektrische Kontaktierung zwischen Steckereinrichtung 4 und Gehäuse 1 gewährleistet.

Figur 2 zeigt eine seitliche Aufsicht auf das Gehäuse 1 aus der Figur 1. Gleiche Bauelemente sind mit gleichen Bezugszeichen versehen. Es ist erkennbar, dass die Gehäuseunterseite 10 rechts und links des Führungsrücksprungs 101 zwei Gehäusestellflächen 100 ausbildet. Auf diesen Gehäusestellflächen 100 steht das Gehäuse 1 auf einer Abstellebene AE. Der vordere Führungsrücksprung 101 weist im Bereich des Anodenkontakts 2 und der umgebenden Zentrierabschnitte 104 ausgehend von der Abstellebene AE betrachtet eine nach oben hin zurück gezogene Gehäuseseitenwand 11 auf. Nach hinten hin betrachtet verläuft der Führungsrücksprung 101 wieder nach unten in Richtung der Abstellebene AE ohne diese jedoch zu erreichen. Kurz vor dem Erreichen der Abstellebene AE knickt die in diesem Bereich vom Führungsrücksprung 101 geformte Kontur der Gehäuseunterseite 10 parallel zur Abstellebene AE nach hinten hin ab und begrenzt einen Kabelraum 17 des Gehäuses 1. In Figur 3 ist eine Aufsicht auf die Gehäuseunterseite 10 des Gehäuses 1 aus der Figur 1 und 2 dargestellt. Hier sind beide Führungsrücksprünge 101,102 an den gegenüberliegenden Kanten der Gehäuseunterseite 10 erkennbar. Die beiden Führungsrücksprünge 101,102 gehen ineinander über. Der komplette Bereich zwischen den beiden Kanten ist durch die ineinander übergehenden Führungsrücksprünge 101,102 von der Abstellebene AE beabstandet. Wenn ein solches Gehäuse 1 mit seiner Gehäuseunterseite 10 auf Schnee oder Matsch abgestellt wird, so wird der Schnee oder Matsch zunächst mit den Gehäusestellflächen 100 und dann mit der Unterseite des Kabelraums 17 in Kontakt treten. Bis in die obersten Bereiche der Führungsrücksprünge 101,102 mit dem Anodenkontakt 2 und dem Kathodenkontakt 3 wird der Schnee oder der Matsch nicht vordringen können.

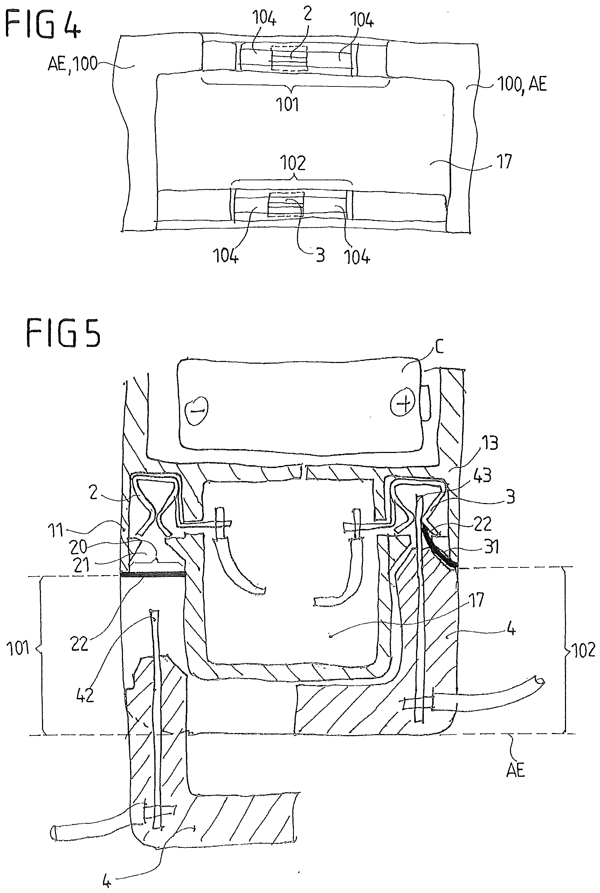

Figur 4 zeigt einen vergrößerten Teilausschnitt der Aufsicht auf die Gehäuseunterseite 10 aus Figur 3.

Figur 5 zeigt eine Schnittdarstellung entlang der Linie V-V aus Figur 2, wobei Teile einer Steckereinrichtung 4 zusätzlich dargestellt sind. Gleiche Bauelemente sind wiederum mit gleichen Bezugszeichen versehen. In dieser Darstellung ist links die Anodenöffnung 20 mit dem darüber befindlichen Anodenöffnungskanal 21 zu erkennen, der sich von der Anodenöffnung 20 zum Anodenkontakt 2 erstreckt. Die Gehäuseseitenwand 11 schützt den Anodenkontakt 2 lateral vor Umwelteinflüssen. Die Anodenöffnung 20 ist durch eine Abdeckeinrichtung 22 geschlossen. Dabei handelt es sich beispielsweise um eine Klappe aus einem elastisch verformbaren Material. Diese wird beim Aufsetzen des Gehäuses 1 auf die Steckereinrichtung 4 vom Anodenkontaktstecker 42 und vom Kathodenkontaktstecker 43 zur Seite gebogen, so dass die Kontaktstecker 42,43 in die zugehörigen Kontakte 2,3 eingreifen können. Der gebogene Zustand der Abdeckeinrichtung 22 zur Kathodenöffnung 30 ist auf der rechten Seite dargestellt. Rein Schematisch ist eine Energiespeicherzelle C gezeigt. Dabei kann es sich um wieder aufladbare Gleichstromspeicher in Form aller Arten elektrochemischer Sekundärzellen um Kondensatoren handeln.

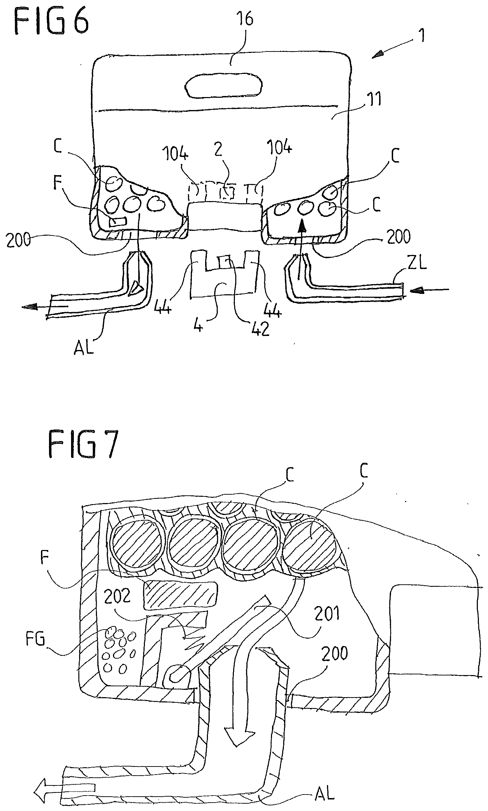

Figur 6 zeigt eine seitliche Aufsicht auf eine zweite Ausführungsform des Gehäuses 1 mit Schnittstellen 200 für eine Klimatisierung des Gehäuseinnenraums. Im Vergleich zur ersten Ausführungsform gleiche Bauelemente sind mit gleichen Bezugszeichen versehen. Die vorangehend gemachten Ausführungen gelten daher entsprechend. Um Wiederholungen zu vermeiden, wird nachfolgend vornehmlich auf die Unterschiede eingegangen. Benachbart zum vorderen Führungsrücksprung 101 ist jeweils eine als Öffnung ausgeformte Klimatisierungsschnittstelle 200 in der Gehäuseunterseite 10 angeordnet. Das Innere des Gehäuses 1 ist durch eine teilweise weg gelassene Gehäuseseitenwand 11 erkennbar. Dort sind eine Vielzahl elektrisch miteinander verschalteter Energiespeicherzellen C beabstandet voneinander angeordnet. Wird nun das Gehäuse 1 auf die Steckereinrichtung 4 gesetzt, so erfolgt gleichzeitig zur elektrischen Kopplung des Gehäuses 1 eine Kopplung des Gehäuseinnenraums an eine Zuluftleitung ZL und an eine Abluftleitung AL. Auf diese Weise kann der Gehäuseinnenraum auf einer gewünschten Arbeitstemperatur gehalten werden. Im Gehäuseinnenraum kann eine Feuerlöscheinrichtung F angeordnet werden. Insbesondere bei modernen Lithiumionen-Akkumulatoren kann es insbesondere bei fehlerhafter Ansteuerung beim Be- und Entladen zu derart hohen Temperaturen kommen, dass eine akute Brandgefahr besteht.

Figur 7 zeigt einen vergrößerten Teilausschnitt aus der Figur 6, wobei im Unterschied zu Figur 6 eine Abdeckklappe 201 gezeigt ist, die im Bereich der Klimatisierungsschnittstelle 200 verschwenkbar am Gehäuse 1 angelenkt ist. Im geschlossenen Zustand verdeckt die Abdeckklappe 201 die Klimatisierungsschnittstelle 200. Der Verschwenkmechanismus ist durch eine Feder 202 federbelastet, so dass beim Aufsetzen des Gehäuses 1 auf die hier gezeigte Abluftleitung AL die Abdeckklappe 201 gegen die Kraft der Feder 202 in den Gehäuseinnenraum verschwenkt wird. Bei Absetzen des Gehäuses 1 drückt die Feder 202 die Abdeckklappe 201 wieder zurück auf die Klimatisierungsschnittstelle 200. Neben der Feuerlöscheinrichtung F kann ergänzend ein Feuerlöschgranulat FG im Inneren des Gehäuses 1 vorgesehen sein.

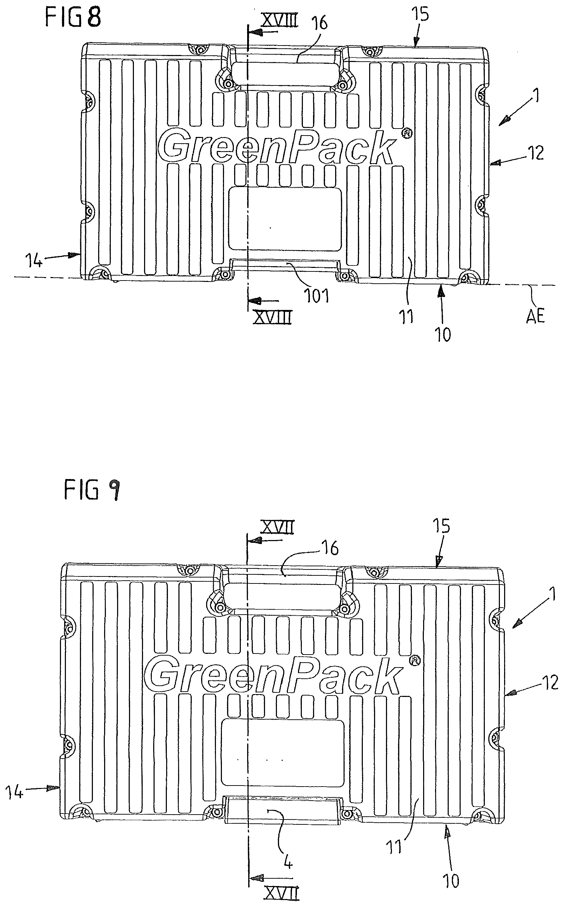

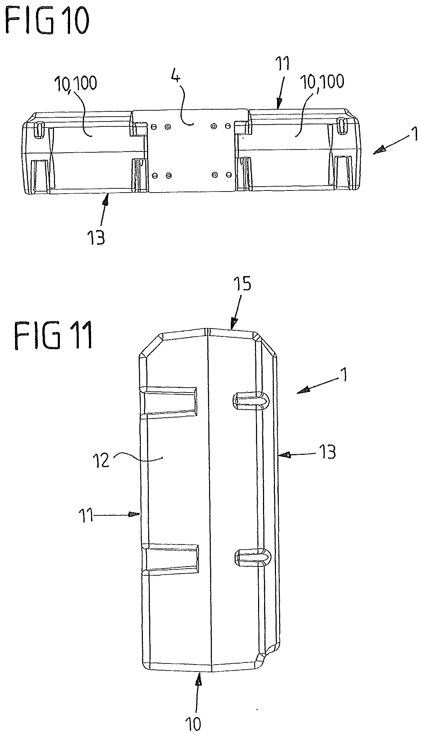

Figur 8 zeigt eine Aufsicht auf die Seite einer dritten Ausführungsform eines Gehäuses 1 ohne zugehörige Steckereinrichtung. Im Vergleich zur ersten Ausführungsform sind gleiche Bauelemente mit gleichen Bezugszeichen versehen. Die vorangehend gemachten Ausführungen gelten daher entsprechend. Um Wiederholungen zu vermeiden, wird nachfolgend vornehmlich auf die Unterschiede eingegangen. In dieser Ausführungsform ist das Gehäuse 1 mit seiner Gehäuseunterseite 10, vier Gehäuseseitenwänden 11,12,13,14 und der Gehäuseoberseite 15 im Wesentlichen quaderförmig ausgebildet. Figur 9 zeigt die Ansicht des Gehäuses 1 aus Figur 8 aufgesetzt auf eine passende Steckereinrichtung 4. Figur 10 zeigt eine Aufsicht auf die Gehäuseunterseite 10 dieses Gehäuses 1. Die Steckereinrichtung 4 ist derart ausgebildet, dass ihre Außenkontur nach dem Aufsetzen des Gehäuses 1 mit seinen Führungsrücksprüngen 101,102 auf die Steckereinrichtung 4 bündig mit der Gehäuseunterseite 10, und der vorderen Gehäuseseitenwand 11 und der hinteren Gehäuseseitenwand 13 abschließt. Diese Ausgestaltung folgt auch aus Figur 11, wo eine seitliche Aufsicht auf das Gehäuse 1 dargestellt ist.

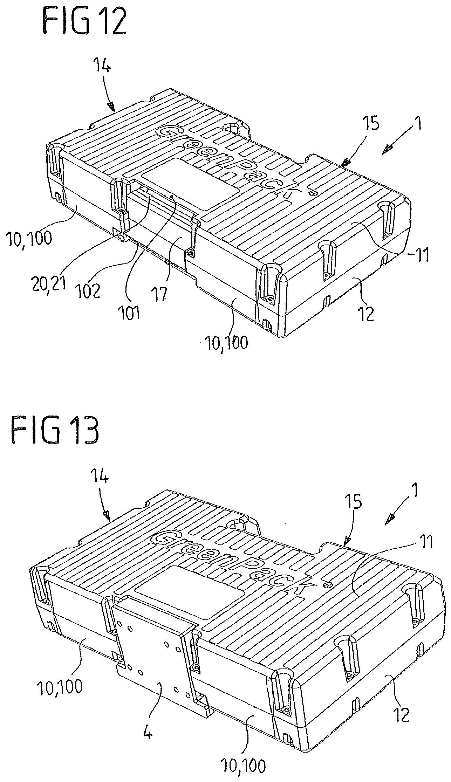

Figur 12 zeigt eine perspektivische Ansicht auf das Gehäuse 1 aus Figur 8 ohne eingesteckte Steckereinrichtung 4 und Figur 13 zeigt die gleiche perspektivische Ansicht mit eingesteckter Steckereinrichtung 4.

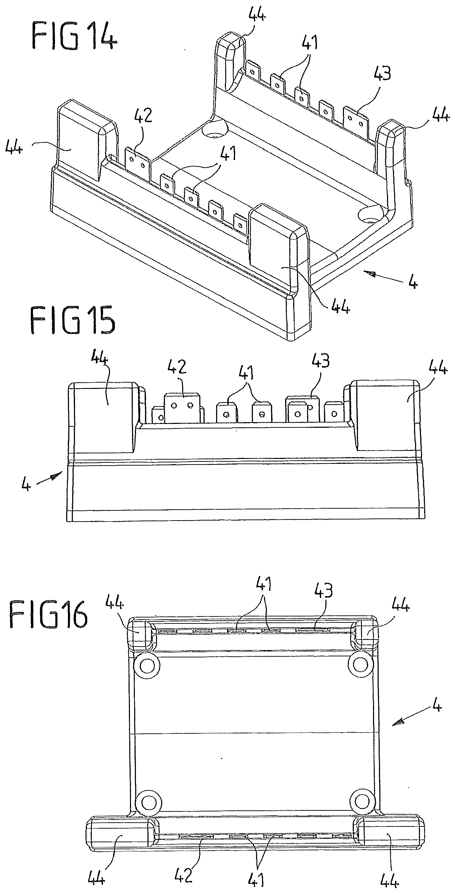

Figur 14 zeigt eine perspektivische Ansicht auf die Steckereinrichtung 4 zur dritten Ausführungsform des Gehäuses 1. Zusätzlich zum Anodenkontaktstecker 42 und zum Kathodenkontaktstecker 43 weist die Steckereinrichtung noch eine Mehrzahl von Datenkontaktsteckern 41 auf. Sowohl benachbart zum Anodenkontaktstecker 42 als auch zum Kathodenkontaktstecker 43 sind jeweils vier Datenkontaktstecker 41 angeordnet. Anodenkontaktstecker 42 und Kathodenkontaktstecker 43 sind hinsichtlich ihres Abstands maximiert diagonal angeordnet, damit die Strecke für Kriechströme entsprechend groß ist.

Aus der Figur 15, die eine Aufsicht auf die Frontseite der Steckereinrichtung 4 zeigt, geht hervor, dass die Führungszapfen 44 die Kontaktstecker 41,42,43 nach oben hin etwas überragen. Dadurch ist gewährleistet, dass beim Aufsetzen des Gehäuses 1 auf die Steckereinrichtung 4 durch den zunächst einsetzenden mechanischen Kontakt zwischen den Führungszapfen 44 und den über die passenden Querschnittsfläche zugeordneten Zentrierabschnitten 104 die für die elektrische Kontaktierung gewünschte Position vom Gehäuse 1 zur Steckereinrichtung 4 hergestellt ist. Danach bewegen sich aus dieser Position Gehäuse 1 und Steckereinrichtung 4 entlang der Erstreckungsrichtung der Führungszapfen 44 aufeinander zu, so dass die Kontaktstecker 41,42,43 in die zugeordneten elektrischen Kontakte 2,3,414 des Gehäuses 1 eingreifen. Figur 16 zeigt eine Aufsicht auf die Oberseite der Steckereinrichtung 4. Hier ist erkennbar, dass die Kontaktstecker 41,42,43 als Messerkontakte ausgebildet sind.

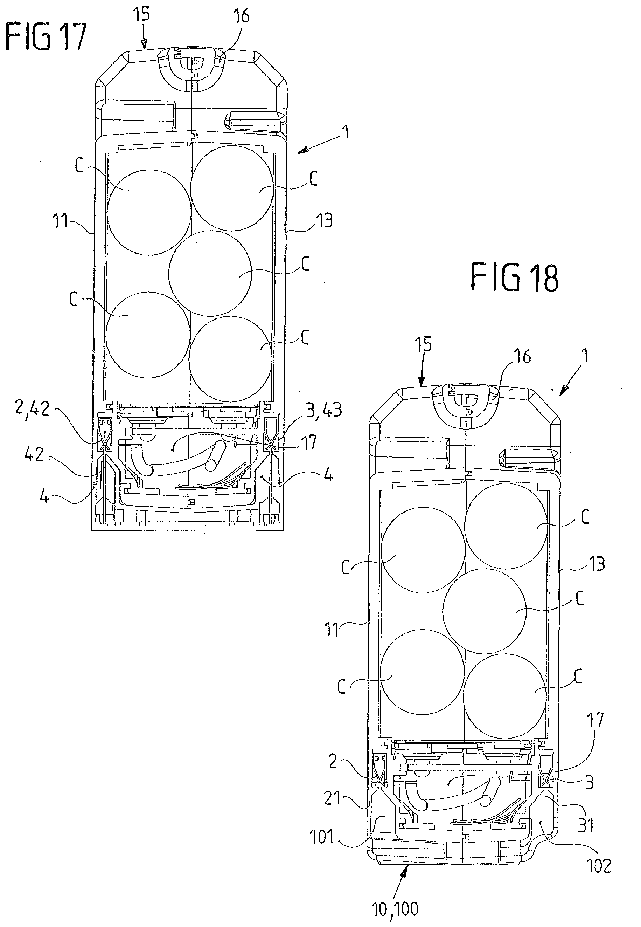

Figur 17 zeigt eine Schnittdarstellung entlang der Linie XVII-XVII aus Figur 9 und Figur 18 eine Schnittdarstellung entlang der Linie XVIII-XVIII aus Figur 8.

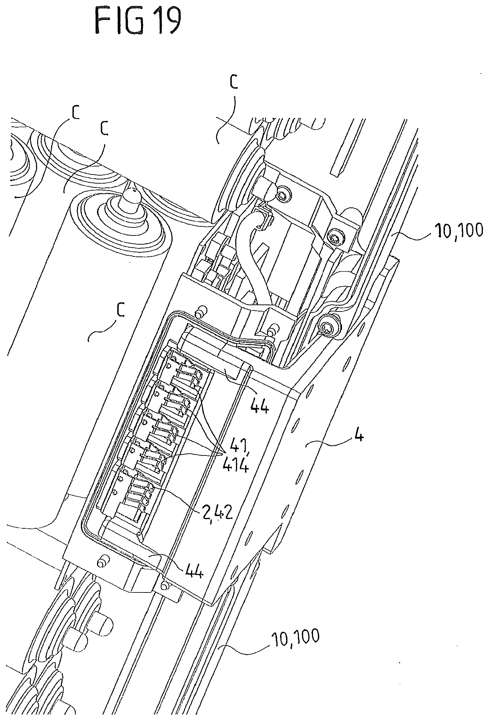

Figur 19 zeigt eine perspektivische Ansicht einer vergrößerten Teilansicht des Gehäuses 1 mit Steckereinrichtung 4 aus der Figur 13 ohne Gehäuseseitenwand 10. Aufgrund der in dieser Darstellung weg gelassenen Gehäuseseitenwand 11 sind die Energiespeicherzellen C und die kontaktierten Kontaktstecker 41,42,43 zu sehen.

### Bezugszeichenliste:

- 1: Gehäuse
- 2: Anodenkontakt
- 3: Kathodenkontakt
- 4: Steckereinrichtung
- 10: Gehäuseunterseite
- 11: Gehäuseseitenwand
- 12: Gehäuseseitenwand
- 13: Gehäuseseitenwand
- 14: Gehäuseseitenwand
- 15: Gehäuseoberseite
- 16: Handgriff
- 17: Kabelraum
- 20: Anodenöffnung
- 21: Anodenführungskanal
- 22: Abdeckeinrichtung
- 30: Kathodenöffnung
- 31: Kathodenführungskanal
- 41: Datenkontaktstecker
- 42: Anodenkontaktstecker
- 43: Kathodenkontaktstecker
- 44: Führungszapfen
- 100: Gehäusestellfläche
- 101: Führungsrücksprung
- 102: Führungsrücksprung
- 104: Zentrierabschnitte
- 200: Klimatisierungsschnittstelle
- 201: Abdeckklappe für Klimatisierungsschnittstelle
- 202: Feder für Abdeckklappe

- C: Energiespeicherzelle
- F: Feuerlöscheinrichtung
- FG: Feuerlöschgranulat
- AE: Abstellebene
- ZL: Zuluftleitung
- AL: Abluftleitung

## Patentansprüche

1. Behälter für eine per Hand tragbare, wieder aufladbare Gleichstrom-Energie-Speichervorrichtung mit folgenden Merkmalen:
- ein Gehäuse (1) aufweisend eine Gehäuseunterseite (10) mit einer Gehäusestellfläche (100), eine Gehäuseoberseite (15), Gehäuseseitenwände (11,12,13,14) und einen Gehäuseinnenraum,
- ein elektrischer Anodenkontakt (2) und
- ein elektrischer Kathodenkontakt (3),
wobei in der Gehäuseunterseite (10) an einander gegenüberliegenden Kanten der Gehäuseunterseite Führungsrücksprünge (101,102) ausgebildet sind, die sich von einer durch die Gehäusestellfläche (100) definierten Abstellebene (AE) in Richtung Gehäuseoberseite (15) erstrecken,
**dadurch gekennzeichnet, dass**
der Anodenkontakt (2) und der Kathodenkontakt (3) in einem oder in mehreren der Führungsrücksprünge (101,102) mindestens fünf Millimeter beabstandet von der Abstellebene am Gehäuse (1) angeordnet sind, wobei der zum Anodenkontakt (2) und zum Kathodenkontakt (3) benachbarte Bereich der jeweiligen Gehäuseseitenwand mindestens fünf Millimeter von der Abstellebene (AE) beabstandet endet, wobei derart dass die Gehäuseunterseite (10) von der Gehäusestellfläche (100) aus betrachtet zumindest im Randbereich des Gehäuses (1) ein abgestuftes Oberflächenprofil aufweist, wobei dieses abgestufte und damit von der Abstellebene (AE) beabstandete Oberflächenprofil lateral nicht durch Abschnitte der Gehäuseseitenwände (11,12,13,14) begrenzt ist, so dass auch bei einem Abstellen des Behälters im Matsch bis zu den abgestuft beabstandeten Bereichen der Gehäuseunterseite (10) herauf dringender Schmutz keinen lateralen Halt hat.

2. Behälter gemäß Anspruch 1, **dadurch gekennzeichnet, dass** die Gehäuseunterseite (10) im Bereich zwischen den an den gegenüberliegenden Kanten des Gehäuses ausgebildeten Führungsrücksprüngen (101,102) mindestens fünf Millimeter von der Abstellebene (AE) beabstandet abschließt.

3. Behälter gemäß Anspruch 1 oder 2, **dadurch gekennzeichnet, dass** die Führungsrücksprünge (101,102) Zentrierabschnitte (104) aufweisen, die benachbart zu dem Anodenkontakt (2) und/oder dem Kathodenkontakt (3) angeordnet sind.

4. Behälter nach Anspruch 3, **dadurch gekennzeichnet, dass** in der Aufsicht auf die Gehäuseunterseite (10) die Zentrierabschnitte (104) benachbart zum Anodenkontakt (2) eine andere Querschnittskontur aufweisen als die Zentrierabschnitte (104) benachbart zum Kathodenkontakt (3).

5. Behälter nach Anspruch 3 oder 4, **dadurch gekennzeichnet, dass** sich die Zentrierabschnitte (104) zumindest abschnittsweise über den Anodenkontakt (2) und/oder über den Kathodenkontakt (3) hinaus in Richtung Gehäuseoberseite (10) erstrecken.

6. Behälter gemäß einem der vorangehenden Ansprüche, **dadurch gekennzeichnet, dass** die Führungsrücksprünge (101,102) zumindest abschnittsweise als Vertiefungen der Gehäuseseitenwände (11,13) ausgebildet sind.

7. Behälter gemäß einem der vorangehenden Ansprüche, **dadurch gekennzeichnet, dass** der Anodenkontakt (2) und der Kathodenkontakt (3) in einander gegenüber liegenden Führungsrücksprüngen (101,102) angeordnet sind.

8. Behälter gemäß einem der vorangehenden Ansprüche, **dadurch gekennzeichnet, dass** die Gehäuseunterseite (10) eine Anodenöffnung (20) und eine Kathodenöffnung (30) aufweist, wobei von der Anodenöffnung (20) bis zum Anodenkontakt (2) als Abschnitt eines der Führungsrücksprünge (101,102) ein Anodenführungskanal (21) mit einer Anodenführungskanaltiefe ausgebildet ist und
von der Kathodenöffnung (30) bis zum Kathodenkontakt (3) als Abschnitt eines der Führungsrücksprünge (101,102) ein Kathodenführungskanal (31) mit einer Kathodenführungskanaltiefe ausgebildet ist.

9. Behälter gemäß Anspruch 8, **dadurch gekennzeichnet, dass** der Anodenführungskanal (21) und/oder der Kathodenführungskanal (31) angrenzend an eine der vier Gehäuseseitenwände (11,12,13,14) ausgebildet ist und sich entlang der Gehäuseseitenwände (11,12,13,14) erstreckt.

10. Behälter gemäß Anspruch 9, **dadurch gekennzeichnet, dass** der Anodenkontakt (2) und der Kathodenkontakt (3) innerhalb des jeweiligen Führungskanals (21,31) und/oder an den Gehäuseseitenwänden (11,12,13,14) derart angeordnet sind, dass der Abstand zwischen Anodenkontakt und Kathodenkontakt maximal ist.

11. Behälter gemäß einem der Ansprüche 8 bis 10, **dadurch gekennzeichnet, dass** die Anodenöffnung (20) und die Kathodenöffnung (30) unterschiedliche Öffnungskonturen aufweisen.

12. Behälter gemäß einem der Ansprüche 8 bis 11, **dadurch gekennzeichnet, dass** der Anodenführungskanal (21) und/oder der Kathodenführungskanal (31) gegenüber dem Gehäuseinnenraum hermetisch versiegelt sind.

13. Behälter gemäß einem der vorangehenden Ansprüche, **dadurch gekennzeichnet, dass** der Anodenkontakt (2) und/oder der Kathodenkontakt (3) durch mechanisch verschwenkbare Abdeckeinrichtungen (22,32) verdeckt sind.

14. Behälter gemäß einem der vorangehenden Ansprüche, **dadurch gekennzeichnet, dass** benachbart zu den Führungsrücksprüngen (101,102) und/oder innerhalb der Führungsrücksprünge (101,102) Klimatisierungsschnittstellen (200) für die Klimatisierung des Gehäuseinnenraums ausgebildet sind.

15. Behälter gemäß einem der vorangehenden Ansprüche mit einer Steckereinrichtung (4) zum elektrischen Kontaktieren des Anodenkontaktes (2) und des Kathodenkontaktes (3) des Behälters (1) durch ein Aufsetzen des Behälters (1) auf die Steckereinrichtung (4).

## Claims

1. A container for a hand-portable, rechargeable direct current storage device, having the following characteristics:
- a housing (1) provided with a housing underside (10) with a housing set-down surface (100), a housing upper side (15), housing side walls (11, 12, 13, 14) and a housing interior,
- an electrical anode contact (2) and
- an electrical cathode contact (3),
wherein the housing underside (10) has configured upon it, on mutually opposite edges, set-back guide means (101, 102) which extend in the direction of the housing upper side (15) from a set-down plane (AE) defined by the housing set-down surface (100),
**characterized in that**
the anode contact (2) and the cathode contact (3) in one or more of the set-back guide means (101, 102), are arranged on the housing (1) at a distance of at least five millimeters from the set-down plane, whereby that region of the respective housing side wall which is adjacent to the anode contact (2) and the cathode contact (3) terminates at a distance of at least five millimeters from the set-down plane (AE), wherein the housing underside (10), considered from the housing set-down surface (100), is provided with a stepped surface profile section, at least at the periphery of the housing (1), whereby said stepped surface profile section which, accordingly, is removed from the set-down plane (AE), is not limited laterally by housing side wall segments (11, 12, 13, 14) such that, even where the container is set down on sludge, any dirt which penetrates to those regions of the housing underside (10) which are recessed in this stepped arrangement will not achieve any lateral purchase.

2. The container as claimed in claim 1, **characterized in that** the housing underside (10), in the region between the set-back guide means (101, 102) configured on the opposite edges of the housing, terminates at a distance of at least five millimeters from the set-down plane (AE).

3. The container as claimed in claim 1 or claim 2, **characterized in that** the set-back guide means (101, 102) are provided with central cut-outs (104), which are arranged adjacently to the anode contact (2) and/or to the cathode contact (3).

4. The container as claimed in claim 3, **characterized in that**, in a view of the housing underside (10), the central cut-outs (104) arranged adjacently to the anode contact (2) show a different cross-sectional profile to the central cut-outs (104) arranged adjacently to the cathode contact (3).

5. The container as claimed in claim 3 or 4, **characterized in that** the central cut-outs (104) extend at least partially beyond the anode contact (2) and/or the cathode contact (3) in the direction of the housing upper side (10).

6. The container as claimed in one of the preceding claims, **characterized in that** the set-back guide means (101, 102) are configured, at least partially, as recesses in the housing side walls (102, 104).

7. The container as claimed in one of the preceding claims, **characterized in that** the anode contact (2) and the cathode contact (3) are arranged in mutually opposing set-back guide means (101, 102).

8. The container as claimed in one of the preceding claims, **characterized in that** the housing underside (10) is provided with an anode opening (20) and a cathode opening (30) whereby, from the anode opening (20) through to the anode contact (2), a section of one of the set-back guide means (101, 102) is configured as an anode guide channel (21) with an anode guide channel recess, and from the cathode opening (30) through to the cathode contact (3), a section of one of the set-back guide means (101, 102) is configured as a cathode guide channel (31) with a cathode guide channel recess.

9. The container as claimed in claim 7, **characterized in that** the anode guide channel (21) and/or the cathode guide channel (31) are arranged adjacently to one of the four housing side walls (11, 12, 13, 14), and extend along the housing side walls (11, 12, 13, 14).

10. The container as claimed in claim 9, **characterized in that** the anode contact (2) and the cathode contact (3) are arranged inside the respective guide channel (21, 31) and/or on the housing side walls (11, 12, 13, 14), such that there is a maximum clearance between the anode contact and the cathode contact.

11. The container as claimed in one of claims 8 to 10, **characterized in that** the anode opening (20) and the cathode opening (30) are configured with different opening profiles.

12. The container as claimed in one of claims 8 to 11, **characterized in that** the anode guide channel (21) and/or the cathode guide channel (31) are hermetically sealed in relation to the housing interior.

13. The container as claimed in one of the preceding claims, **characterized in that** the anode contact (2) and/or the cathode contact (3) are covered by mechanically-pivoting cover devices (22, 32).

14. The container as claimed in one of the preceding claims, **characterized in that**, adjacently to the set-back guide means (101, 102) and/or within the set-back guide means (101, 102), air-conditioning interfaces (200) are provided for the air-conditioning of the housing interior.

15. The container as claimed in one of the preceding claims, with a connecting device (4) for the electrical bonding of the anode contact (2) and the cathode contact (3) of the container (1) upon fitting of the container (1) to the connecting device (4).

## Revendications

1. Un récipient pour un dispositif de stockage d'énergie de courant continu rechargeable portable avec les caractéristiques suivantes :
- un boîtier (1) présentant une partie inférieure du boîtier (10) avec une surface d'appui du boîtier (100), une partie supérieure du boîtier (15), des parois latérales du boîtier (11, 12, 13, 14) et un intérieur du boîtier,
- un contact électrique d'anode (2) et
- un contact électrique de cathode (3),
dans lequel dans la partie inférieure du boîtier (10) des retraits de guidage (101, 102) sont formés à des bords opposés de la partie inférieure du boîtier et s'étendent d'un plan de dépose (AE) défini par la surface d'appui du boîtier (100) en direction de la face supérieure du boîtier (15),
**caractérisée en ce que**
le contact d'anode (2) et le contact de cathode (3) sont disposés dans un ou plusieurs des retraits de guidage (101, 102) à une distance d'au moins cinq millimètres du plan de dépose au boîtier (1), dans lequel la région de la paroi latérale respective qui est adjacente au contact d'anode (2) et au contact de cathode (3) finit à une distance d'au moins cinq millimètres du plan de dépose (AE), dans lequel la partie inférieure du boîtier (10) vu de la surface d'appui du boîtier (100) présente au moins dans la périphérie du boîtier (1) un profile de surface échelonné, dans lequel ledit profile de surface échelonné et ainsi espacé du plan de dépose (AE) n'est pas limité latéralement par des sections des parois latérales du boîtier (11, 12, 13, 14) de sorte que également en déposant le boîtier dans la boue une saleté pénétrant vers le haut aux régions échelonnées espacées de la partie inférieure du boîtier (10) n'a pas d'appui latérale.

2. Le récipient selon la revendication 1, **caractérisé en ce que** la partie inférieure du boîtier (10) s'achève dans la région située entre les retraits de guidage (101, 102) formés aux bords opposés du boîtier à une distance d'au moins cinq millimètres du plan de dépose (AE).

3. Le récipient selon la revendication 1 ou 2, **caractérisé en ce que** les retraits de guidage (101, 102) présentent des zones de centrage (104) adjacentes au contact d'anode (2) et / ou au contact de cathode (3).

4. Le récipient selon la revendication 3, **caractérisé en ce que** dans la vue vers la partie inférieure du boîtier (10) les zones de centrage (104) adjacentes au contact d'anode (2) ont un contour en coupe différent de celui des zones de centrage (104) adjacentes au contact de cathode (3).

5. Le récipient selon la revendication 3 ou 4, **caractérisé en ce que** les sections de centrage (104) s'étendent au moins par sections au-delà du contact d'anode (2) et / ou au-delà du contact de cathode (3) dans la direction de la partie supérieure du boîtier (10).

6. Le récipient selon l'une des revendications précédentes, **caractérisé en ce que** les retraits de guidage (101, 102) sont au moins par sections en forme des cavités des parois latérales du boîtier (102, 104).

7. Le récipient selon l'une des revendications précédentes, **caractérisé en ce que** le contact d'anode (2) et le contact de cathode (3) sont disposés dans des retraits de guidage (101, 102) mutuellement opposés.

8. Le récipient selon l'une des revendications précédentes, **caractérisé en ce que** la partie inférieure du boîtier (10) présente une ouverture d'anode (20) et une ouverture de cathode (30), dans lequel de l'ouverture de l'anode (20) au contact d'anode (2) en tant que section de l'un des retraits de guidage (101, 102), un canal de guidage d'anode (21) est formé avec une profondeur de canal de guidage d'anode et de l'ouverture de cathode (30) au contact de cathode (3) en tant que section de l'un des retraits de guidage (101, 102), un canal de guidage de cathode (31) est formé avec une profondeur de canal de guidage de cathode.

9. Le récipient selon la revendication 7, **caractérisé en ce que** le canal de guidage d'anode (21) et / ou le canal de guidage de cathode (31) sont adjacents à l'une des quatre parois latérales du boîtier (11, 12, 13, 14) et s'étendent le long des parois latérales du boîtier (11, 12, 13, 14).

10. Le récipient selon la revendication 9, **caractérisé en ce que** le contact d'anode (2) et le contact de cathode (3) sont disposés dans le canal de guidage respectif (21, 31) et / ou sur les parois latérales du boîtier (11, 12, 13, 14) de sorte que la distance entre le contact d'anode et le contact de cathode est maximale.

11. Le récipient selon l'une des revendications 8 à 10, **caractérisé en ce que** l'ouverture d'anode (20) et l'ouverture de cathode (30) ont des contours d'ouverture différents.

12. Le récipient selon l'une des revendications 8 à 11, **caractérisé en ce que** le canal de guidage d'anode (21) et / ou le canal de guidage de cathode (31) sont scellés hermétiquement vis-à-vis l'intérieur du boîtier.

13. Le récipient selon l'une des revendications précédentes, **caractérisé en ce que** le contact d'anode (2) et / ou le contact de cathode (3) sont masqués par des moyens de recouvrement (22, 32) pouvant pivoter mécaniquement.

14. Le récipient selon l'une des revendications précédentes, **caractérisé en ce que** des interfaces de climatisation (200) pour la climatisation de l'intérieur du boîtier sont formées au voisinage des retraits de guidage (101, 102) et / ou dans les retraits de guidage (101, 102).

15. Le récipient selon l'une des revendications précédentes, avec un dispositif à fiche (4) destiné à entrer en contact électrique avec le contact d'anode (2) et le contact de cathode (3) du récipient (1) en plaçant le récipient (1) sur le dispositif à fiche (4).
